# NEW EUROPEAN PATENT SPECIFICATION

(11) **EP 3 032 125 B2**
(45) Date of publication and mention of the opposition decision: **23.02.2022**
(45) Mention of the grant of the patent: 14.11.2018
(21) Application number: 14196853.7
(22) Date of filing: 08.12.2014
(51) Int. Cl.: F16D 55/22

(54) **Disc brake and components thereof**
Scheibenbremse und Komponenten davon
Frein à disque et ses composants

(43) Date of publication of application: 15.06.2016
(73) Proprietor: Haldex Brake Products AB, 261 24 Landskrona (SE)
(72) Inventor: Welin, Hans, 26013 Sankt Ibb (SE)
(74) Representative: Habermann, Hruschka & Schnabel

(56) References cited:
- EP-A1- 1 715 211
- EP-A1- 1 715 211
- EP-A2- 1 482 198
- EP-A2- 1 801 447
- DE-A1-102005 026 720
- DE-A1-102005 026 720
- DE-U- 1 801 447
- JP-A- 2006 064 026
- JP-A- 2011 094 767
- US-A1- 2008 135 352
- "Scheibenbremse", Wikipedia , 2 April 2019 (2019-04-02), XP055630748, Retrieved from the Internet: URL:https://de.wikipedia.orq/wiki/Scheiben bremse

## Description

The present invention refers to a disc brake, preferably for utility vehicles, and in particular to the way how a caliper or a carrier is fixed to a connecting element, which is arranged on a wheel axle.

A connecting element, also called torque plate, is arranged and fixed to the wheel axle of a vehicle in such a way that the caliper or carrier supporting such caliper of a disc brake can be mounted to the connecting element by means of mounting bolts, which are arranged to both sides of the wheel axle. For that purpose it is known to arrange the mounting bolts between the connecting element and the caliper or carrier in a direction in parallel to the brake disc axis and lateral thereto. By such arrangement, the torque, which may result from slightly different force relations between the disc-leading side and the disc-trailing side, has to be taken up entirely by the friction between the torque plate and the caliper or carrier at their respective abutment surfaces.

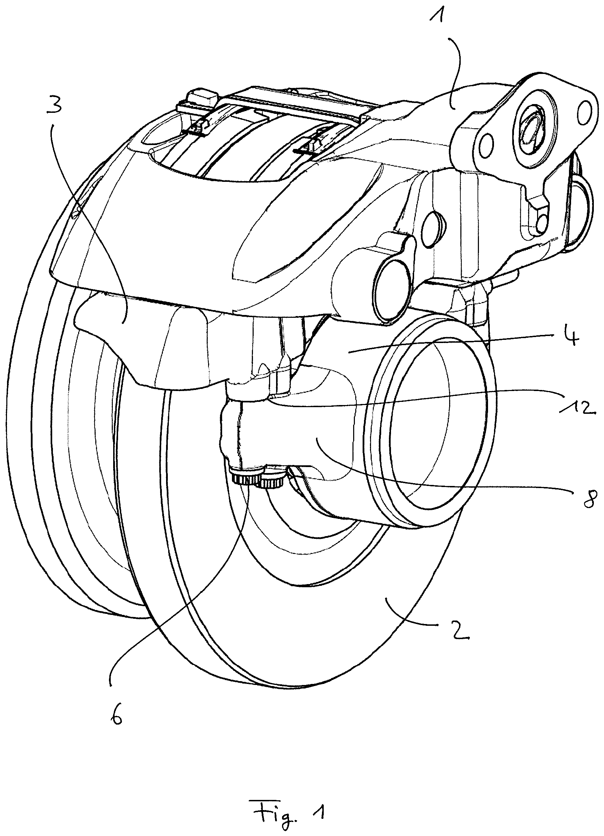

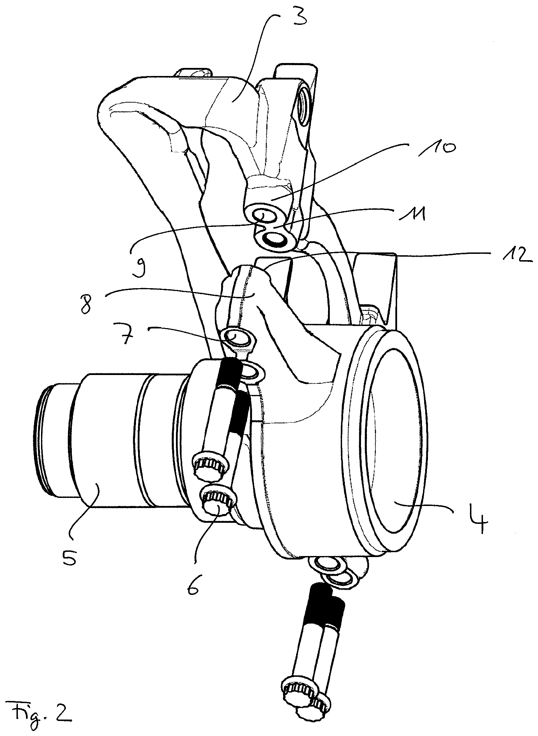

Alternatively, the mounting bolts can be mounted radially so as to extend perpendicularly to the wheel axle. Such typical radial-mount type of disc brake according to the prior art is exemplarily shown in the perspective view of Fig. 1 and in the explosive view of Fig. 2.

The disc brake according to the prior art comprises a caliper 1 for receiving an actuation mechanism (not shown) and overlapping a brake disc 2. The caliper 1 is slideably supported on a carrier 3, which is bolted to a connecting element or torque plate 4. As can be seen from Fig. 2, the connecting element 4 is fixed to a wheel axle 5, so that the entire disc brake can be mounted on the wheel axle 5.

The connection between the connecting element 4 of the wheel axle 5 and the carrier 3 is realized by several mounting bolts 6, two of which are arranged to both sides of the wheel axle 5 and which each traverse through holes 7 in laterally arranged sections 8 of the connecting element 4, so as to become received by threaded openings 9 being arranged in corresponding lateral mounting sections 10 of the carrier 3, respectively. Thereby, flat abutment surfaces 11 of the carrier 3 do attach to flat abutment surfaces 12 of the connecting element 4, which abutment surfaces 11 and 12 are arranged parallel to a plane extending in and being parallel to the longitudinal direction of the wheel axle 5 or the axis of the brake disc 2.

Further radial-mount type disc brakes are, e.g., known from EP 0 971 144 B1 and DE 100 63 787 A1.

When only perpendicularly arranged abutment surfaces do exist between the carrier or the caliper, in case of a fixed-type caliper which will be directly mounted to the torque plate, and the torque plate, the torque during braking, which results that at the disc-leading side the caliper or carrier tends to rotate away from the brake disc while at the disc-trailing side the caliper or carrier tends to move towards the brake disc, leads to the effect that different forces from the friction between the abutment surfaces of the torque plate and the caliper or carrier have to be taken up by the mounting bolts on both sides of the brake disc axis. These effects become even larger when the mounting bolts are not tightened properly, which could happen during improper overhaul works. Therefore, for safety reasons, the mounting bolts have to be dimensioned large enough to take up such forces entirely. As a consequence, the lateral sections comprising the through holes for the mounting bolts at the torque plate on the one hand and the lateral mounting sections comprising the threaded openings for the mounting bolts at the caliper or carrier on the other have to be substantially dimensioned as well, which leads to larger carrier or caliper designs in this respect.

From EP 1 715 211 A1 and EP 1 801 447 A2 disc brakes with torque plates of the radial mount type are known in which the abutment surfaces are inclined so that the bolts will be mounted at respective angles relative to each other and/or towards the wheel axle. DE 10 2005 026 720 A1 discloses a torque plate in which the bolts are attached with an angle relative to each other and where the bolts are not located in a common plane, but offset to each other.

Based on that it is the object of the present invention to provide an enhanced connection between a caliper or a carrier supporting a caliper and a connecting element or torque plate of a wheel axle, so as to enable more economic designs of these components of a disc brake.

Such object is solved by a disc brake according to claim 1 and claim 2, respectively.

The caliper or the carrier comprises at least one abutment surface, which does attach to at least one abutment surface of the connecting element, when the caliper or the carrier are fixed to the connecting element by means of several mounting bolts. According to the invention at least one abutment surface of said connecting element and at least one abutment surface of said caliper or said carrier, which abutment surfaces are in attachment which each other, are inclined in relation to a plane extending in parallel to the longitudinal axis of the wheel axle.

The angle of inclination could be selected deliberately depending on constructional and manufacturing needs. According to the invention the angle of inclination with respect to the plane being defined in parallel to the longitudinal direction or axis of the wheel axle could be in a range of 20 to 40 degrees, preferably in a range of 25 to 35 degrees and most preferably 30 degrees.

Due to the inclined abutment surfaces no friction forces between the torque plate and the carrier or caliper occur in the plane of the torque-induced rotational movement of the caliper or carrier upon braking, as such turning forces resulting therefrom will be taken up entirely by the inclined abutment surfaces. At the same time, the mounting bolts will not be influenced by such friction and turning forces, so that with the presence of inclined abutment surfaces according to the invention mounting bolts could be employed, which can be dimensioned and selected to be smaller, accordingly.

Smaller mounting bolts go along with correspondingly smaller dimensioned support sections at the connecting element and mounting sections at the caliper or carrier, resulting further in a reduction of weight of and of manufacturing costs for the caliper, carrier or connecting element, respectively.

According to a first embodiment of the invention, the connecting element or the torque plate comprises support sections at both sides of the wheel axle, which support sections both comprise inclined abutment surfaces. The mounting bolts do traverse the support sections and will be received in threaded openings, which are arranged in mounting sections of the caliper or the carrier, correspondingly, which mounting sections comprise abutment surfaces being congruently shaped and inclined in accordance with the inclined surfaces of the connecting element. For such embodiment, it is enough that only one accurate mounting bolt is tightly fit to provide some lateral control of the disc brake.

According to a second embodiment of the invention, only one support section on one side of the wheel axle comprises an inclined abutment surface. Correspondingly, the opposite mounting section of the caliper or the carrier comprises such inclined abutment surface. For this embodiment one accurate bolt comprises a preferably radial guiding surface to cooperate with a corresponding guiding surface in the mounting section of the caliper or carrier, so that the position of the torque plate or connecting element can be controlled in lateral direction. By that it is possible to arrange the mounting bolts slightly offset to each other, so that the carrier or caliper can be better adapted to constructional needs.

For both embodiments, the support sections comprise said inclined abutment surfaces to both sides of the mounting bolts, when seen in the direction of the longitudinal axis of the wheel axle, which abutment surfaces are inclined in opposite directions with respect to each other. Accordingly, the mounting sections of the caliper or carrier comprise correspondingly shaped and inclined surfaces which do come into abutment with the inclined surfaces of the support sections, respectively.

According to yet another embodiment the support section on one side of the wheel axle could comprise a different height than the support section on the opposite side of the wheel axle. By that offset in height of the support section in relation to the opposite support section, it is ensured that calipers or carriers will not be mounted incorrectly.

According to another embodiment of the invention, at least one support section comprises a geometrically shaped element which corresponds with a correspondingly shaped element of the related mounting section of the caliper or carrier. Such geometrically shaped elements do form some kind of engagement mechanism between the connecting element and the carrier or the caliper, but having a large enough play so as to not hinder the assembly process, and could include different shapes, configurations and dimensions, e.g. such as steps, recesses, indents or similar. For example, steps could be arranged about halfway between the two mounting bolts of one support section. The provision of such elements on both the support section of the torque plate and the corresponding mounting section of the carrier or caliper ensures that no incorrectly shaped caliper or carrier will be installed on the torque plate, which increases the safety during assembly.

Further features and advantages become apparent from the description of the embodiments as shown in the enclosed drawings.
- Fig. 1: is a perspective view of a disc brake being mounted on a wheel axle according to the prior art;
- Fig. 2: is an explosive view of a carrier and a connecting element of such a disc brake according to the prior art;
- Fig. 3: is an explosive view of a first embodiment according to the invention showing a connecting plate on a wheel axle and a carrier;
- Fig. 4: is an explosive view of a second embodiment according to the invention showing a connecting plate on a wheel axle and a carrier;
- Figs. 5a,b: are cross-sections through a support section and mounting section of a connected carrier and torque plate; and
- Fig. 6: is a schematic sectional view of a third embodiment according to the invention showing a geometrically shaped element at the support section of the connecting element.

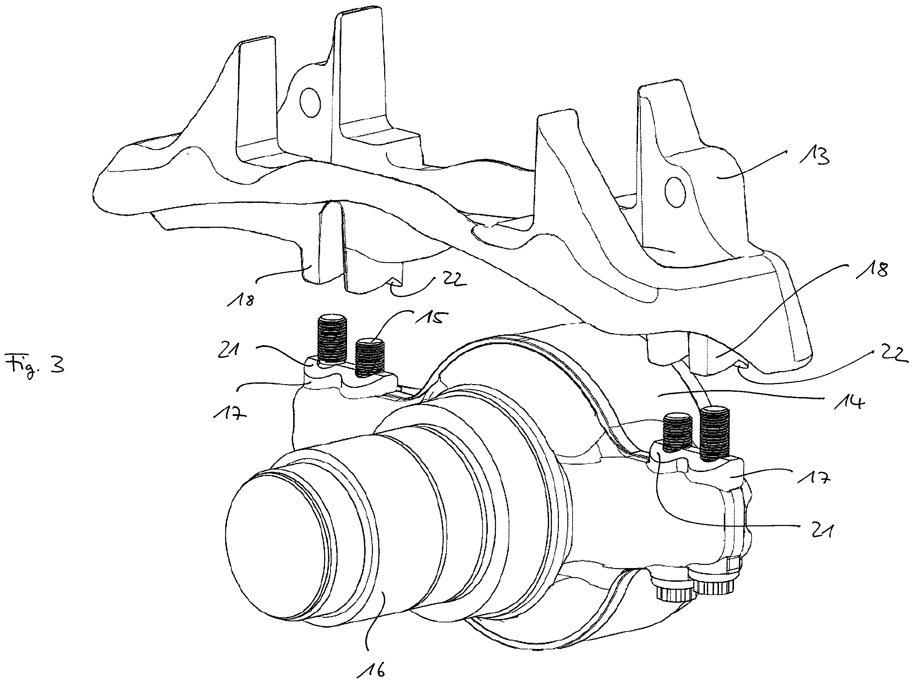

Fig. 3 shows a first embodiment of the invention in an explosive view.

A carrier 13 is to be mounted on a connecting element or torque plate 14 via four mounting bolts 15. The connecting element 14 is fixedly connected to a wheel axle 16.

The connecting element 14 comprises to both sides of the wheel axle 16 one support section 17, respectively. Accordingly, the carrier 13 comprises mounting sections 18 being arranged at corresponding lateral locations.

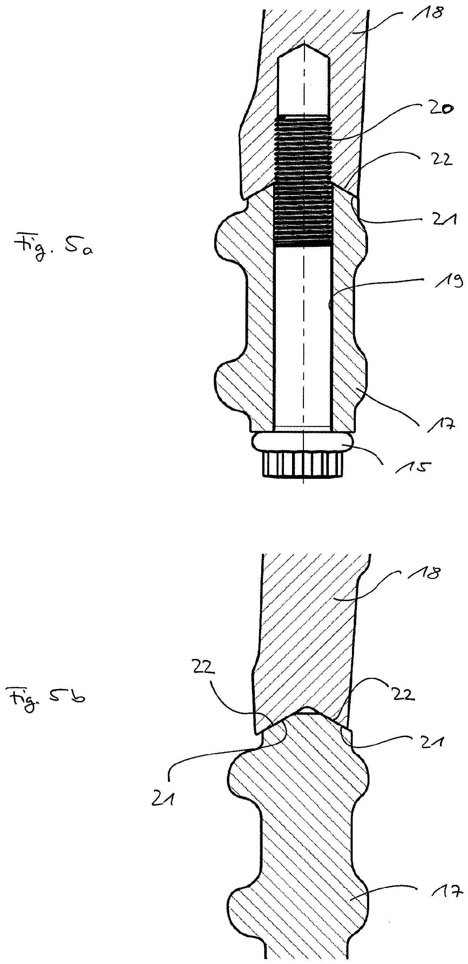

As can be seen in Fig. 5a, the support sections 17 comprise through holes 19 which receive the mounting bolts 15, whereas the mounting sections 18 of the carrier 13 comprise threaded openings 20, into which the mounting bolts 15 will be fixedly inserted.

According to the invention, the support sections 17 comprise inclined abutments surfaces 21, the inclination of which is directed towards a plane being defined in parallel to the longitudinal direction or axis of the wheel axle 16.

In accordance thereto, the mounting sections 18 of the carrier 13 comprise inclined abutment surfaces 22, which are congruently inclined with respect to the inclination of the abutment surfaces 21 of the torque plate 14.

As can be particularly seen in Figs. 5a and b, the inclined surfaces 21 and 22 of both the support section 17 and of the mounting section 18 are provided at both sides of a symmetry line being defined by the mounting bolts 15, in which the inclination of the abutment surfaces 21 and 22 is directed towards each other so as to form some kind of wedge-like connection between the carrier 13 and the connecting element 14.

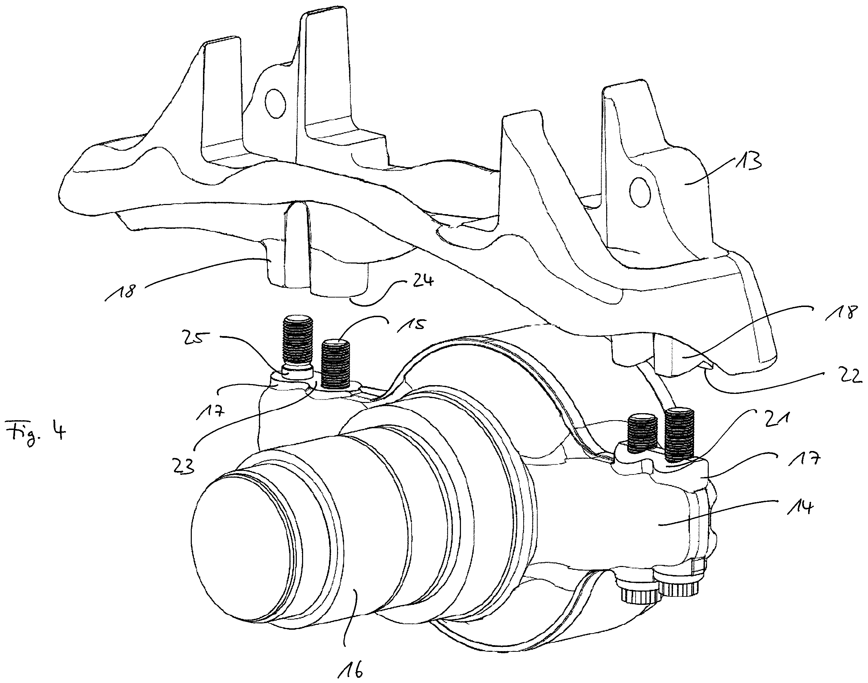

A further embodiment is shown in Fig. 4. According to this embodiment, only one support section 17 on one side of the wheel axle 16 comprises an inclined abutment surface 21, whereas the other support section 17 opposite of the wheel axle 16 comprises a flat abutment surface 23, which cooperates with a flat abutment surface 24 of the carrier 13.

It can be also seen from Fig. 4 that the support section 17 comprising the inclined abutment surface 21 is offset with respect to the height in relation to the support section 17 comprising the flat abutment surface 23.

The outer mounting bolt 15 in the support section 17 comprising the flat surfaces 23 comprises a radial guiding surface 25, which cooperates with a corresponding radial ring (not shown) in an opening of the corresponding mounting section 18 of the carrier 13. The guiding ring 25 serves to accurately guide the carrier 13 on the torque plate 14 laterally.

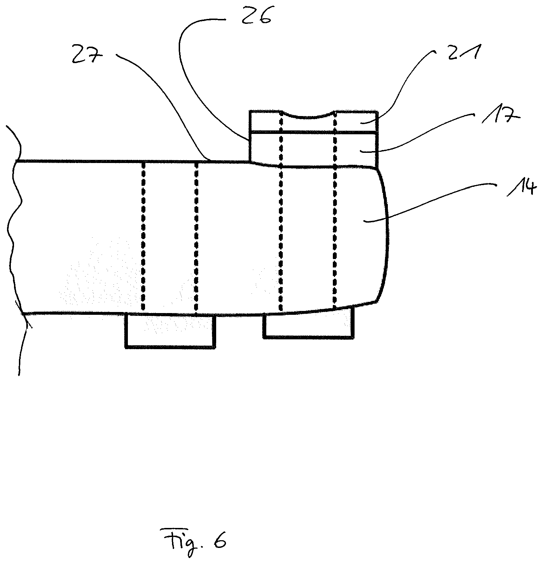

Fig. 6 schematically shows a sectional view of one side of the connecting element 14. The support section 17 comprises a step 26 which is arranged halfway between the two bolts (indicated by the dotted lines of the through holes), which step 26 will match with a correspondingly shaped step (not shown) of the related mounting section 18 of the carrier 13, so that the correct carrier 13 fits to the correct connecting element 14 in an accurate way. The abutment surface 27 relating to the inner mounting bolt 15 is thus flat. Mistakes during assembly can be avoided thereby. However, all kind of geometrically shaped elements, which allow matching between two components, could be used for that purpose.

## Claims

1. Disc brake comprising a caliper and a connecting element (14) being arranged on a wheel axle (16), the caliper being fixed to the connecting element (14) by means of mounting bolts (15) thereby said connecting element (14) and said caliper being in attachment via abutment surfaces (21,22;23,24), respectively, in which at least one abutment surface (21) of said connecting element (14) and at least one abutment surface (22) of said caliper, which abutment surfaces (21,22) are attaching each other, are inclined in relation to a plane extending in parallel to the longitudinal axis of said wheel axle (16),
in which the inclination of said abutment surfaces (21,22) is orientated against a direction of a torque-induced rotational movement of the caliper upon braking, and
in which the connecting element (14) comprises support sections (17) on both sides of the wheel axle (16), which support sections (17) are being traversed by said mounting bolts (15), in which at least one support section (17) on one side of the wheel axle (16) comprises said inclined abutment surfaces (21) to both sides of the mounting bolts (15) in the direction of the longitudinal axis of the wheel axle (16), **characterized in that**
said abutment surfaces (21) are inclined in opposite directions.

2. Disc brake comprising a caliper, a carrier (13) supporting the caliper, and a connecting element (14) being arranged on a wheel axle (16), the carrier (13) being fixed to the connecting element (14) by means of mounting bolts (15) thereby said connecting element (14) and said carrier (13) being in attachment via abutment surfaces (21,22;23,24), respectively,
in which at least one abutment surface (21) of said connecting element (14) and at least one abutment surface (22) of said carrier (13), which abutment surfaces (21,22) are attaching each other, are inclined in relation to a plane extending in parallel to the longitudinal axis of said wheel axle (16),
in which the inclination of said abutment surfaces (21,22) is orientated against a direction of a torque-induced rotational movement of the carrier (13) upon braking, and
in which the connecting element (14) comprises support sections (17) on both sides of the wheel axle (16), which support sections (17) are being traversed by said mounting bolts (15), in which at least one support section (17) on one side of the wheel axle (16) comprises said inclined abutment surfaces (21) to both sides of the mounting bolts (15) in the direction of the longitudinal axis of the wheel axle (16),
**characterized in that**
said abutment surfaces (21) are inclined in opposite directions.

3. Disc brake of claim 1 or 2, in which the support section (17) on one side of the wheel axle (16) comprises a different height than the support section (17) on the opposite side of the wheel axle (16).

4. Disc brake of claim 1, 2 or 3, in which at least one support section (17) comprises a geometrically shaped element (26) which matches with a correspondingly geometrically shaped element of the caliper or carrier (13).

5. Disc brake of one of claims 1 to 4, in which an angle of inclination of the inclined abutment surfaces (21,22) is in a range of 20 to 40 degrees, preferably in a range of 25 to 35 degrees and most preferably 30 degrees.

## Patentansprüche

1. Scheibenbremse mit einem Bremssattel und einem auf einer Radachse (16) angeordneten Verbindungselement (14), wobei der Bremssattel mittels Befestigungsschrauben (15) an dem Verbindungselement (14) befestigt ist, wodurch das Verbindungselement (14) und der Bremssattel jeweils über Anlageflächen (21,22;23,24) in Verbindung stehen,
wobei mindestens eine Anlagefläche (21) des Verbindungselements (14) und mindestens eine Anlagefläche (22) des Bremssattels in Bezug auf eine Ebene geneigt sind, die sich parallel zu der Längsachse der Radachse (16) erstreckt, wobei die Anlageflächen (21,22) aneinander anliegen,
wobei die Neigung der Anlageflächen (21,22) entgegen einer Richtung einer drehmoment-induzierten Drehbewegung des Bremssattels beim Bremsen ausgerichtet ist, und
bei der das Verbindungselement (14) Stützabschnitte (17) auf beiden Seiten der Radachse (16) aufweist, die von den Befestigungsschrauben (15) durchquert werden, wobei mindestens ein Stützabschnitt (17) auf einer Seite der Radachse (16) die geneigte Anlageflächen (21) zu beiden Seiten der Befestigungsschrauben (15) in der Richtung der Längsachse der Radachse (16) aufweist,
**dadurch gekennzeichnet, dass**
die Anlageflächen (21) in gegenläufigen Richtungen geneigt sind.

2. Scheibenbremse mit einem Bremssattel, einem den Bremssattel tragenden Träger (13) und einem Verbindungselement (14), das auf einer Radachse (16) angeordnet ist, wobei der Träger (13) mittels Befestigungsschrauben (15) an dem Verbindungselement (14) befestigt ist, wodurch das Verbindungselement (14) und der Träger (13) jeweils über Anlageflächen (21,22;23,24) in Verbindung stehen,
wobei mindestens eine Anlagefläche (21) des Verbindungselements (14) und mindestens eine Anlagefläche (22) des Trägers (13) in Bezug auf eine Ebene geneigt sind, die sich parallel zu der Längsachse der Radachse (16) erstreckt, wobei die Anlageflächen (21,22) aneinander anliegen,
wobei die Neigung der Anlageflächen (21,22) entgegen einer Richtung einer drehmoment-induzierten Drehbewegung des Trägers (13) beim Bremsen ausgerichtet ist, und
bei der das Verbindungselement (14) Stützabschnitte (17) auf beiden Seiten der Radachse (16) aufweist, die von den Befestigungsschrauben (15) durchquert werden, wobei mindestens ein Stützabschnitt (17) auf einer Seite der Radachse (16) die geneigte Anlageflächen (21) zu beiden Seiten der Befestigungsschrauben (15) in der Richtung der Längsachse der Radachse (16) aufweist,
**dadurch gekennzeichnet, dass**
die Anlageflächen (21) in gegenläufigen Richtungen geneigt sind.

3. Scheibenbremse nach Anspruch 1 oder 2, bei der der Stützabschnitt (17) auf einer Seite der Radachse (16) eine andere Höhe als der Stützabschnitt (17) auf der gegenüberliegenden Seite der Radachse (16) aufweist.

4. Scheibenbremse nach Anspruch 1, 2 oder 3, bei der mindestens ein Stützabschnitt (17) ein geometrisch geformtes Element (26) aufweist, das mit einem entsprechend geometrisch geformten Element des Bremssattels oder Trägers (13) übereinstimmt.

5. Scheibenbremse nach einem der Ansprüche 1 bis 4, bei der ein Neigungswinkel der geneigten Anlageflächen (21,22) in einem Bereich von 20 bis 40 Grad und vorzugsweise in einem Bereich von 25 bis 35 Grad liegt und besonders bevorzugt 30 Grad beträgt.

## Revendications

1. Frein à disque comportant un étrier et un élément de liaison (14) qui est disposé sur un essieu de roue (16), l'étrier étant fixé à l'élément de liaison (14) au moyen de boulons de montage (15) de sorte que ledit élément de liaison (14) et ledit étrier sont en fixation via des surfaces de butée (21, 22 ; 23, 24), respectivement,
dans lequel au moins une surface de butée (21) dudit élément de liaison (14) et au moins une surface de butée (22) dudit étrier, lesquelles surfaces de butée (21, 22) sont fixées l'une à l'autre, sont inclinées par rapport à un plan s'étendant parallèlement à l'axe longitudinal dudit essieu de roue (16),
dans lequel l'inclinaison desdites surfaces de butée (21, 22) est orientée contre une direction d'un mouvement de rotation induit par couple de l'étrier lors d'un freinage, et
dans lequel l'élément de liaison (14) comprend des sections de support (17) sur les deux côtés de l'essieu de roue (16), lesquelles sections de support (17) sont traversées par lesdits boulons de montage (15), dans lequel au moins une section de support (17) sur un côté de l'essieu de roue (16) comprend les surfaces de butée inclinée (21) sur les deux côtés des boulons de montage (15) dans la direction de l'axe longitudinal de l'essieu de roue (16),
**caractérisé en ce que**
lesquelles surfaces de butée (21) sont inclinées dans des directions opposées.

2. Frein à disque comprenant un étrier, un support (13) supportant l'étrier, et un élément de liaison (14) qui est disposé sur un essieu de roue (16), le support (13) étant fixé à l'élément de liaison (14) au moyen de boulons de montage (15) de sorte que ledit élément de liaison (14) et ledit support (13) sont en fixation via des surfaces de butée (21,22 ; 23,24), respectivement,
dans lequel au moins une surface de butée (21) dudit élément de liaison (14) et au moins une surface de butée (22) dudit support (13), lesquelles surfaces de butée (21, 22) sont fixées l'une à l'autre, sont inclinées par rapport à un plan s'étendant parallèlement à l'axe longitudinal dudit essieu de roue (16),
dans lequel l'inclinaison desdites surfaces de butée (21, 22) est orientée contre une direction d'un mouvement de rotation induit par couple de l'étrier lors d'un freinage, et
dans lequel l'élément de liaison (14) comprend des sections de support (17) sur les deux côtés de l'essieu de roue (16), lesquelles sections de support (17) sont traversées par lesdits boulons de montage (15), dans lequel au moins une section de support (17) sur un côté de l'essieu de roue (16) comprend les surfaces de butée inclinée (21) sur les deux côtés des boulons de montage (15) dans la direction de l'axe longitudinal de l'essieu de roue (16),
**caractérisé en ce que**
lesquelles surfaces de butée (21) sont inclinées dans des directions opposées.

3. Frein à disque selon la revendication 1 ou 2, dans lequel la section de support (17) sur un côté de l'essieu de roue (16) comporte une hauteur différente de la section de support (17) sur le côté opposé de l'essieu de roue (16).

4. Frein à disque selon la revendication 1, 2 ou 3, dans lequel au moins une section de support (17) comprend un élément de forme géométrique (26) qui correspond à un élément de forme géométrique correspondante de l'étrier ou du support (13).

5. Frein à disque selon l'une des revendications 1 à 4, dans lequel l'angle d'inclinaison des surfaces de butée inclinées (21, 22) est compris entre 20 et 40 degrés, de préférence entre 25 et 35 degrés et de manière la plus préférée de 30 degrés.
